# FASCICULE DE BREVET EUROPEEN

(11) **EP 1 652 278 B1**
(45) Date de publication et mention de la délivrance du brevet: **26.05.2010**
(21) Numéro de dépôt: 04786376.6
(22) Date de dépôt: 06.08.2004
(51) Int. Cl.: H02B 13/075

(54) **COMMUTATEUR DE TERRE A TROIS POSITIONS DE COMMUTATION**
MASSESCHALTER MIT DREI STELLUNGEN
THREE-POSITION GROUND SWITCH

(30) Priorité: 07.08.2003 FR 0309740
(43) Date de publication de la demande: 03.05.2006
(73) Titulaire: AREVA T&D SAS, 92084 Paris La Défense Cedex (FR)
(72) Inventeur: GUTALJ, Vladimir, CH-5036 Oberentfelden (CH); DOESSEGGER, André, CH-5036 Oberentfelden (CH); HILTBRUNNER, Hugo, CH-2824 Vicques (CH)
(74) Mandataire: Poulin, Gérard
(86) Numéro de dépôt international: PCT/FR2004/050378
(87) Numéro de publication internationale: WO 2005/018066

(56) Documents cités:
- EP-A- 1 020 970
- DE-A1- 4 243 046
- US-A- 4 555 603

## Description

### DOMAINE TECHNIQUE

L'invention porte sur un commutateur électrique ou sectionneur haute ou moyenne tension à trois positions de commutation avec une position de mise à la terre comprenant, dans une enveloppe fermée de manière étanche pour être remplie d'un gaz isolant diélectriquement, un élément de commutation mobile selon une direction axiale pour connecter électriquement deux barres conductrices espacées l'une de l'autre et comprenant en outre un contact fixe de terre destiné à être connecté électriquement à une des deux barres conductrices par l'intermédiaire de l'élément de commutation quand le commutateur est dans la position de mise à la terre.

Un tel sectionneur de terre de type GIS (Gas Insulated Switch) à isolation au SF6 est par exemple connu du EP-1128509. Dans ce sectionneur, deux contacts fixes de coupure fixés respectivement sur deux barres conductrices coaxiales l'une par rapport à l'autre ainsi que le contact fixe de terre sont superposés selon ladite direction axiale. Cet agencement connu présente l'inconvénient d'être encombrant, compliqué et coûteux à réaliser.

Le EP-824264 divulgue un sectionneur de type GIS analogue à celui du EP-1128509 mais dans lequel les contacts fixes de coupure sont montés sur deux barres conductrices sensiblement perpendiculaires l'une par rapport à l'autre. Dans cet agencement connu, l'élément de commutation est déplacé selon une direction axiale qui est oblique par rapport aux deux barres conductrices ce qui engendre des complications et des surcoûts de réalisation.

Le sectionneur de type GIS à trois positions de commutation et à isolation au gaz connu du US-5134542 comprend pour chaque phase deux éléments de commutation, l'un destiné à relier deux contacts fixes de coupure fixés respectivement sur les deux barres conductrices, l'autre destiné à relier un des deux contacts fixes de coupure avec le contact fixe de terre. Cet agencement présente encore l'inconvénient d'être compliqué et coûteux à réaliser.

Le but de l'invention est de proposer un commutateur électrique haute et moyenne tension, en particulier un sectionneur de type GIS triphasé à trois positions de commutation avec une position de mise à la terre tel que défini plus haut, qui soit d'une construction plus simple, plus économique et moins encombrante en particulier pour des configurations dans lesquelles les barres conductrices sont sensiblement alignées ou ont des axes sensiblement disposés dans un même plan et formant un angle par exemple de 90°.

L'invention a ainsi pour objet un commutateur électrique tel que défini plus haut caractérisé en ce que le contact fixe de terre est décalé par rapport au trajet de l'élément de commutation selon ladite direction axiale, en ce que l'élément de commutation forme un Y avec un doigt de contact de telle sorte que le doigt de contact et le contact fixe de terre s'engagent l'un dans l'autre par un déplacement de l'élément de commutation selon ladite direction axiale. De plus, un premier contact de coupure fixe d'une des deux barres conductrices et un second contact de coupure fixe de la deuxième barre conductrice sont positionnés sur la même direction axaiale d'une partie coulissante axiale de l'élément de commutation électriquement conducteur.

Le commutateur électrique selon l'invention peut présenter en outre les particularités suivantes :
- la partie coulissante de l'élément de commutation peut être constituée d'une tige qui coulisse selon ladite direction axiale à l'intérieure d'une des deux barres conductrices, le doigt de contact avec la tige formant un Y ;
- la tige de l'élément de commutation s'engage dans un contact fixe de coupure qui est creux et qui est fixé sur l'autre barre conductrice ;
- la partie coulissante de l'élément de commutation peut être constituée d'un manchon qui coulisse selon ladite direction axiale sur l'une des deux barres conductrices, le doigt de contact avec le manchon formant un Y ;
- le manchon de l'élément de commutation s'engage sur un contact fixe de coupure en forme de champignon fixé sur l'autre barre conductrice ;
- le contact fixe de terre est un contact creux en forme de doigts de contacts élastiques dans lequel s'engage le doigt de contact de l'élément de commutation mobile ;
- le contact fixe de terre est une tige et le doigt de contact de l'élément de commutation mobile a une extrémité creuse en forme de tulipe dans laquelle s'engage le contact fixe de terre ;
- il est prévu un système à levier rotatif et à tringle articulée disposé dans l'enveloppe pour déplacer l'élément de commutation mobile selon la dite direction axiale ;
- le contact fixe de terre est noyé en partie dans une plaque support en matière isolante fermant l'enveloppe.

Selon la dernière particularité, la plaque en matière isolante peut servir de support pour une barre conductrice et/ou de paroi de compartimentage pour l'enveloppe. Cette particularité selon laquelle le contact fixe de terre est noyé en partie dans la plaque support est particulièrement avantageuse en termes de compacité du commutateur électrique selon l'invention mais en plus elle peut trouver d'autres applications. Notamment, elle peut s'appliquer pour l'obtention des même avantages à un sectionneur de type GIS dans lequel l'élément de commutation est rotatif. Elle peut encore s'appliquer à d'autres type de commutateur électriques ayant une position de mise à la terre indépendamment d'une réalisation particulière de l'élément de commutation.

Des exemples de réalisation d'un commutateur électrique selon l'invention sont décrits ci-après et illustrés par le dessin.

La figure 1 montre de façon très schématique un commutateur électrique de type GIS à trois positions de commutation selon l'invention dans lequel l'élément de commutation comprend une tige qui coulisse à l'intérieur d'une barre conductrice.

La figure 2 montre de façon très schématique un commutateur électrique de type GIS à trois positions de commutation selon l'invention dans lequel l'élément de commutation comprend un manchon qui coulisse sur une barre conductrice.

La figure 3 montre plus en détail un contact fixe de terre noyé en partie dans la plaque support fermant l'enveloppe du commutateur électrique à trois positions de commutation selon l'invention.

La figure 4 montre selon une vue de dessus une disposition triphasée des contacts fixes de terre noyés dans une plaque support.

La figure 5 montre une disposition du sectionneur selon l'invention quand la plaque support de la figure 4 est enlevée de l'enveloppe.

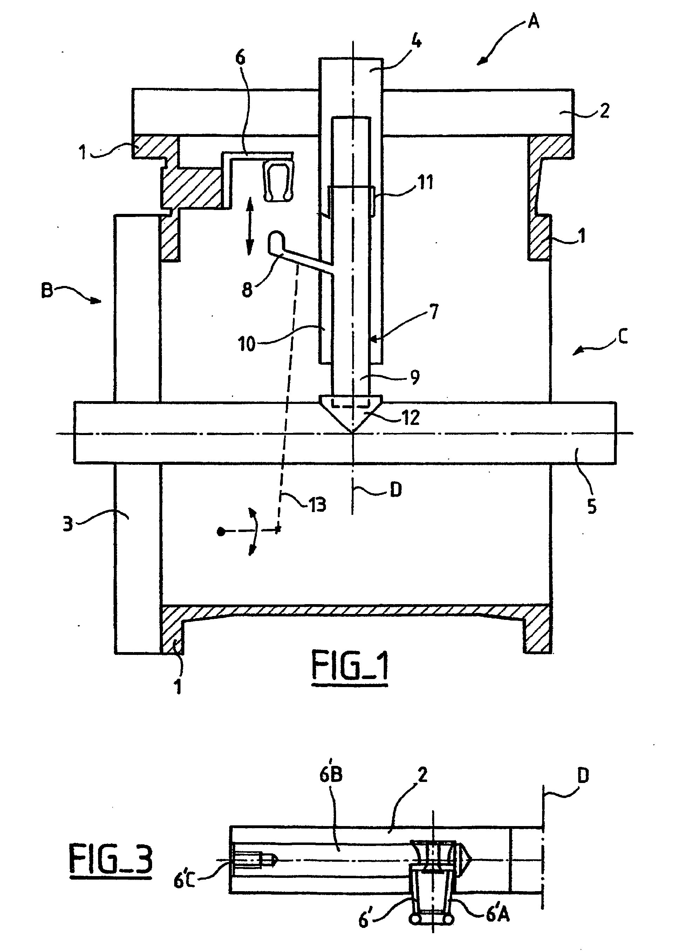

La figure 1 illustre de façon très schématique en coupe transversale un commutateur électrique haute ou moyenne tension selon l'invention qui est ici un sectionneur de type GIS à trois positions de commutation avec une position de mise à la terre.

Sur la figure 1, on a représenté l'enveloppe 1 du sectionneur, généralement une enveloppe métallique de forme générale cylindrique qui présente des ouvertures A,B,C fermées par des plaques en matière isolante électriquement telles que 2,3 servant de supports à des barres de conduction électrique pénétrant dans l'enveloppe 1 par les ouvertures A,B,C. L'enveloppe 1 est fermée de façon étanche pour être remplie d'un gaz isolant diélectriquement comme du SF6 sous une pression de quelques bars.

Comme visible sur la figure 1, les deux plaques support 2,3 sont traversées chacune par une barre électriquement conductrice respectivement 4,5, les deux barres conductrices 4,5 étant montées ici dans l'enveloppe 1 selon une disposition à 90°, c'est-à-dire perpendiculairement l'une par rapport à l'autre en étant espacées l'une de l'autre d'une certaine distance d'isolation diélectrique. Ces deux barres conductrices 4,5 constituent une phase du sectionneur, sachant que l'invention s'applique à chaque phase d'un sectionneur monophasé ou polyphasé haute ou moyenne tension.

Dans l'exemple illustré sur la figure 1, le sectionneur peut être raccordé par l'intermédiaire de la barre conductrice 5 à un jeu de barres blindé du côté de l'ouverture B de l'enveloppe 1 et par l'intermédiaire de la barre 4 à un disjoncteur blindé du côté de l'ouverture A de l'enveloppe 1.

Comme représenté très schématiquement sur la figure 1, le sectionneur comporte pour la phase constituée par les barres conductrices 4,5, un contact fixe de terre 6 qui est disposé à proximité de la plaque support 2 et qui est raccordé électriquement à la terre à travers l'enveloppe métallique 1. Par ailleurs, le sectionneur comprend un élément de commutation 7 mobile selon une direction axiale D pour connecter les deux barres conductrices 4,5 quand il est dans une première position, de commutation ou position de fermeture (montrée sur la figure 1) et pour connecter la barre conductrice 4 avec le contact fixe de terre 6 quand il est dans une position de mise à la terre. La troisième position du sectionneur est une position d'ouverture ou les deux barres conductrices 4,5 sont séparées l'une de l'autre d'une certaine distance d'isolation diélectrique sans mise à la terre de la barre 4.

Selon l'invention, le contact fixe de terre 6 est monté dans l'enveloppe 1 de façon décalée par rapport au trajet de l'élément de commutation selon la direction axiale D et l'élément de commutation 7 forme un Y avec un doigt de contact 8 électriquement conducteur de sorte que la mise à la terre de la barre conductrice 4 se fait par un déplacement de l'élément de commutation 7 selon la direction axiale D, ici un déplacement de l'élément de commutation 7 vers le haut de la figure 1, jusqu'à ce que le contact fixe de terre 6 et le doigt de contact 8 s'engagent l'un dans l'autre.

Dans l'exemple illustré sur la figure 1, l'élément de commutation 7 comprend une tige électriquement conductrice 9 qui s'étend axialement selon la direction D à l'intérieur de la barre conductrice 4. La barre conductrice 4 comporte à cet effet un alésage axial dans lequel coulisse la tige 9 avec une fente longitudinale 10 dans laquelle coulisse le doigt de contact 8 qui forme avec la tige 9 un Y. Dans cet agencement, le raccordement électrique entre la barre conductrice 4 et la tige 9 de l'élément de commutation mobile 7 se fait par un premier contact de coupure fixe 11 du type contact glissant linéaire équipé avec des lamelles de contact et disposé dans le fond de l'alésage de la barre conductrice 4. Le raccordement électrique entre la barre conductrice 5 et la tige 9 de l'élément de commutation mobile 7 se fait par l'intermédiaire d'un second contact de coupure fixe 12 fixé sur la barre 5, ce second contact de coupure étant ici un contact creux équipé avec des lamelles de contact dans lequel s'insère la tige 7. Les deux contacts fixes de coupure sont alignés selon la direction axiale D.

Sur la figure 1, on a représenté le contact fixe de terre 6 sous la forme d'un contact creux en forme de doigts de contacts élastiques dans lequel s'engage le doigt de contact 8 en forme de tige. Bien entendu, le contact fixe de terre 6 pourrait être un contact en forme de tige qui s'engage dans une extrémité creuse en forme de tulipe du doigt de contact 8.

On a représenté sur la figure 1 un système de commande à levier rotatif et à tringle articulée désigné par 13 qui est disposé dans l'enveloppe 1 pour déplacer l'élément de commutation 7 selon la direction D.

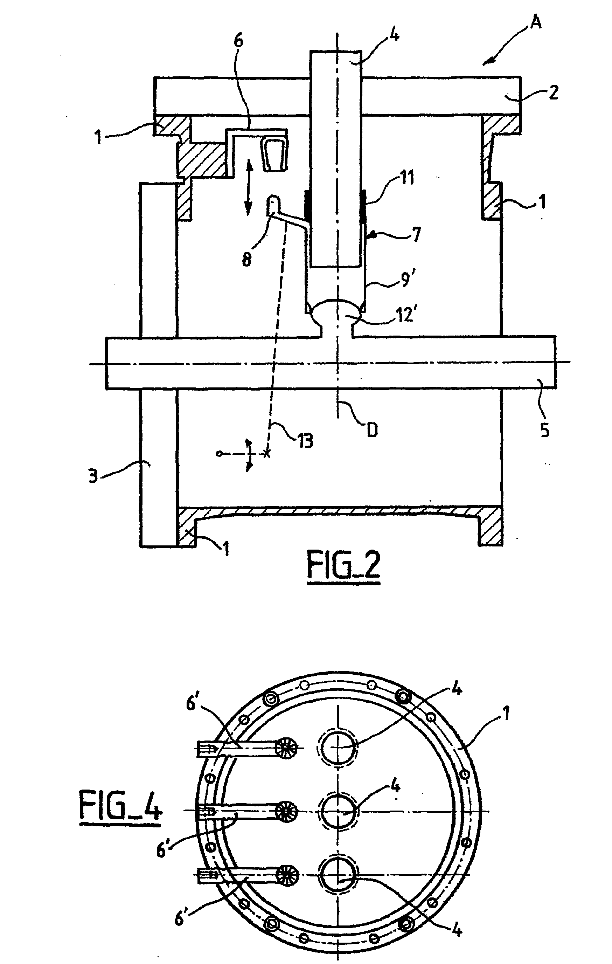

Sur la figure 2, on a représenté un autre exemple de réalisation de l'élément de commutation 7 pour un sectionneur selon l'invention analogue à celui de la figure 1 et qui comprend ici un manchon électriquement conducteur 9' coulissant sur la barre conductrice 4 et relié électriquement à celle-ci par un premier contact fixe de coupure 11 du type contact coulissant linéaire disposé dans le manchon 9'. Le manchon 9' forme un Y avec le doigt de contact 8. Le second contact fixe de coupure 12' fixé sur la barre conductrice 5 est ici en forme de champignon sur lequel se referme l'extrémité en forme de tulipe du manchon 9' quand le sectionneur est dans sa position de fermeture.

De la même manière que dans la figure 1, un système à levier rotatif et à tringle articulée 13 commande le déplacement de l'élément de commutation 7 selon la direction D.

L'invention peut parfaitement s'appliquer à un sectionneur dans lequel les barres d'une même phase qui sont aptes à être reliées par l'élément de commutation du sectionneur sont disposées de façon sensiblement alignée. En effet, il est tout à fait possible de modifier les dispositifs représentés sur les figures 1 et 2 pour obtenir des sectionneurs fonctionnellement identiques dans des architectures à jeux de barres en ligne. Par exemple, à partir du dispositif de la figure 1, il est possible de raccourcir sensiblement de moitié la longueur du segment de barre 5 représenté et de tourner ce segment ainsi que sa plaque support 3 de 90° pour disposer la barre 5 dans l'alignement de la barre 4, à condition bien sûr de prévoir qu'une ouverture de l'enveloppe 1 fermée par la plaque support 3 soit disposée en face de l'ouverture A. Le second contact de coupure fixe 12 doit dans ce cas être fixé à l'extrémité de la barre 5 qui fait face au premier contact de coupure fixe 11.

Selon une particularité importante de l'invention, le contact fixe de terre peut être noyé en partie dans la plaque support 2 comme illustré sur la figure 3 par le contact fixe de terre 6', ce qui contribue à une diminution encore plus grande de l'encombrement du sectionneur. Dans l'exemple de la figure 3, le contact fixe de terre 6' comprend une partie conductrice de contact 6'A creuse qui traverse la plaque support 2 selon la direction axiale D et est munie de doigts de contacts élastiques par exemple en forme de tulipe, le doigt de contact de l'élément de commutation mobile étant apte à s'engager dans cette partie creuse 6'A. Le contact de terre 6' comprend aussi une autre partie conductrice de contact en forme de tige 6'B qui s'étend dans le plan de la plaque support 2 et qui débouche sur le bord extérieur de celle-ci pour permettre un raccordement à la terre par une prise d'extrémité 6'C de la tige. Ce raccordement à la terre peut être réalisé par exemple par un câble embroché d'un côté dans la prise d'extrémité 6'C de la tige et fixé d'un autre côté à l'enveloppe 1 du commutateur. Les deux parties conductrices 6'A et 6'B du contact fixe de terre 6' peuvent être séparables l'une de l'autre pour un montage simple par emboîtement dans la plaque support 2.

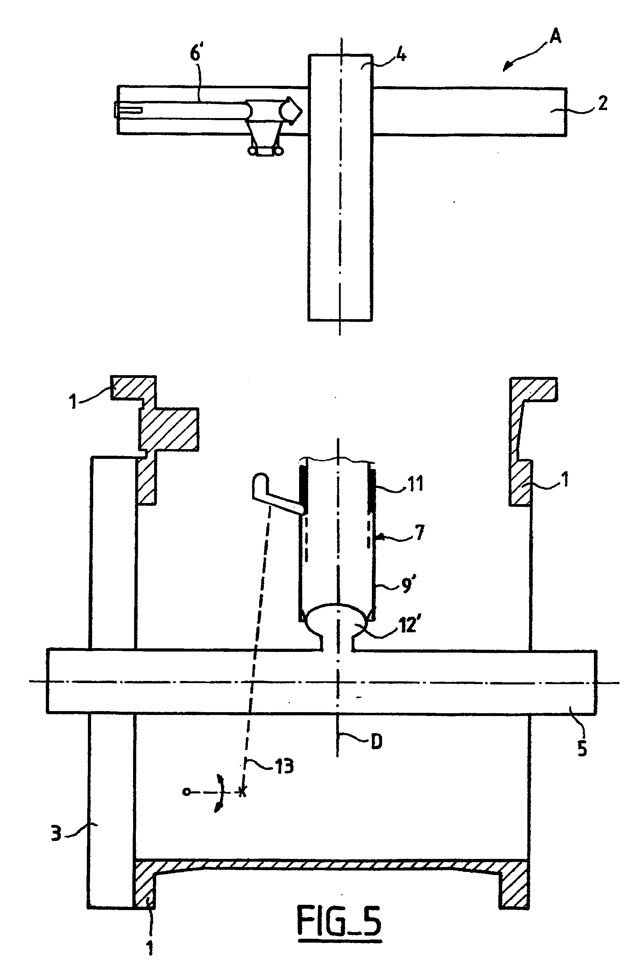

La figure 4 montre selon une vue de dessus la disposition des contacts fixes de terre 6' de la figure 3 dans une construction triphasée du sectionneur selon l'invention. Avec cet agencement, il est possible de procéder à une ouverture de l'enveloppe 1 par enlèvement de la plaque support 2 ensemble avec chaque contact fixe de terre 6' et chaque barre conductrice 4 comme illustré sur la figure 5.

Plus particulièrement, la figure 5 correspond à la réalisation du sectionneur de la figure 2 mais avec un contact fixe de terre 6' noyé en partie dans l'épaisseur de la plaque support 2 comme illustré sur la figure 3. L'enlèvement de la plaque support 2 ensemble avec le contact fixe de terre 6' et la barre conductrice 4 facilite les opérations de maintenance du sectionneur, dans la mesure en particulier où la barre conductrice 4 peut être mise à la terre une fois séparée électriquement de la barre conductrice 5. Cette mise à la terre de la barre 4 s'effectue par l'intermédiaire d'un câble ou d'une pièce conductrice raccordé(e) par exemple au contact en forme de tulipe 6'A du contact fixe de terre 6', ce dernier étant déjà relié à la terre grâce à la prise d'extrémité 6'C de la tige comme mentionné précédemment. En outre il n'est pas nécessaire de démonter le système de commande à levier rotatif et à tringle articulée 13.

Il faut comprendre que lors du soulèvement selon la direction D de la plaque support 2 ensemble avec le contact fixe de terre 6' et la barre conductrice 4, le sectionneur est placé dans sa position de fermeture de sorte que l'élément de commutation 7, comprenant ici le manchon 9', à la fois reste solidaire du second contact fixe de coupure 12' et se sépare de la barre conductrice 4.

## Revendications

1. Commutateur électrique, comprenant une première barre conductrice (4) d'axe (D), une seconde barre conductrice(5) ayant un axe perpendiculaire à l'axe (D) de la première barre conductrice (4), la première barre conductrice (4) ayant une extrémité espacée de la seconde barre conductrice (5), un contact fixe de terre destiné à être connecté électriquement à la première barre conductrice, un élément de commutation (7) mobile selon la direction axiale (D) entre une position de mise à la terre dans laquelle la première et la seconde barre conductrice sont isolées l'une de l'autre et une position de commutation dans laquelle la première et la seconde barre conductrice sont reliées l'une à l'autre, **caractérisé en ce que** l'élément de commutation (7) comporte un doigt de contact (8) parallèle à l'axe (D) et situé à distance de cet axe, de telle sorte que le contact fixe de terre (6) et le doigt de contact (8) s'engagent l'un dans l'autre par un déplacement de l'élément de commutation selon la direction axiale (D), les positions de mise à la terre et de commutation étant situées de part et d'autre de la position d'ouverture.

2. Commutateur électrique selon la revendication 1, **caractérisé en ce qu'**un premier contact de coupure fixe (11) d'une des deux barres conductrices et un second contact de coupure fixe de la deuxième barre conductrice (5) sont positionnés sur la même direction axiale (D) d'une partie coulissante axiale (9) de l'élément de commutation (7) électriquement conducteur.

3. Commutateur électrique selon la revendication 1 ou 2, dans lequel l'élément de la partie coulissante de commutation (7) est une tige (9) qui coulisse selon ladite direction axiale à l'intérieur d'une (4) des deux barres conductrices, le doigt de contact avec la tige formant un Y.

4. Commutateur électrique selon la revendication 3, dans lequel la tige (9) de l'élément de commutation s'engage dans un contact fixe de coupure (12) qui est creux et qui est fixé sur l'autre barre conductrice (5).

5. Commutateur électrique selon la revendication 1 ou 2, dans lequel la partie coulissante de l'élément de commutation (7) est un manchon (9') qui coulisse selon ladite direction axiale sur l'une (4) des deux barres conductrices, le doigt de contact avec le manchon formant un Y.

6. Commutateur électrique selon la revendication 5, dans lequel le manchon (9') de l'élément de commutation s'engage sur un contact fixe de coupure (12') en forme de champignon fixé sur l'autre barre conductrice (5).

7. Commutateur électrique selon la revendication 1 à 6, dans lequel le contact fixe de terre (6) comprend une partie conductrice de contact (6'A) creuse munie de doigts de contacts élastiques et dans laquelle s'engage le doigt de contact de l'élément de commutation mobile.

8. Commutateur électrique selon l'une des revendications 1 à 6, dans lequel le contact fixe de terre (6) est une tigre et le doigt de contact de l'élément de commutation mobile a une extrémité creuse en forme de tulipe dans laquelle s'engage le contact fixe de terre.

9. Commutateur électrique selon l'une des revendications 1 à 8, dans lequel le contact fixe de terre (6') est noyé en partie dans une plaque support (2) en matière isolante fermant l'enveloppe.

## Claims

1. Electrical switch, comprising a first conducting bar (4) with axis (D), a second conducting bar (5) with an axis perpendicular to the axis (D) of the first conducting bar (4) that has an end at a spacing from the second conducting bar (5), a fixed earthing contact that will be electrically connected to the first conducting bar, a switching element (7) free to move along the axial direction (D) between an earthing position in which the first and second conducting bars are separated from each other and a switching position in which the first and second conducting bars are connected to each other, **characterised in that** the switching element (7) comprises a contact pin (8) parallel to the axis (D) and located at a distance from this axis, such that the fixed earthing contact (6) and the contact pin (8) engage in each other through displacement of the switching element along the axial direction (D) , the earthing and switching positions located on each side of the closed position.

2. Electrical switch according to claim 1, **characterised in that** a first fixed breaking contact (11) of one of the two conducting bars and a second fixed breaking contact of the second conducting bar (5) are positioned on the same axial direction (D) of a sliding axial part (9) of the electrically conducting switching element (7).

3. Electrical switch according to claim 1 or 2, in which the sliding part of the switching element (7) is a rod (9) that slides along the said axial direction inside one (4) of the two conducting bars, the contact pin with the rod forming a Y.

4. Electrical switch according to claim 3, in which the rod (9) of the switching element engages in a hollow fixed breaking contact (12) fixed onto the other conducting bar (5).

5. Electrical switch according to claim 1 or 2, in which the sliding part of the switching element (7) is a sleeve (9') that slides on one (4) of the two conducting bars along the said axial direction, the contact pin with the sleeve forming a Y.

6. Electrical switch according to claim 4, in which the sleeve (9') of the switching element engages on a fixed breaking contact (12') in the form of a mushroom fixed on the other conducting bar (5).

7. Electrical switch according to one of claims 1 to 6, in which the fixed earthing contact (6) comprises a conducting part (6'A) with a hollow contact provided with elastic contact pins and into which the contact pin of the mobile switching element engages.

8. Electrical switch according to one of claims 1 to 6, in which the fixed earthing contact (6) is a rod and the contact pin of the mobile switching element has a tulip-shaped hollow end into which the fixed earthing contact engages.

9. Electrical switch according to one of claims 1 to 8, in which the fixed earthing contact (6') is embedded partly in a support plate (2) made of an insulating material closing the enclosure.

## Patentansprüche

1. Elektrischer Schalter mit einer ersten Sammelschiene (4) mit der Achse (D), einer zweiten Sammelschiene (5), deren Achse senkrecht zur Achse (D) der ersten Sammelschiene (4) verläuft, wobei die erste Sammelschiene (4) ein von der zweiten Sammelschiene (5) beabstandetes Ende aufweist, sowie mit einem feststehenden Erdungskontakt, der elektrisch mit der ersten Sammelschiene verbunden werden soll, ein Schaltelement (7), das in axialer Richtung (D) zwischen einer Erdungsstellung, in welcher die erste und die zweite Sammelschiene voneinander getrennt sind, und einer Schaltstellung beweglich ist, in welcher die erste und die zweite Sammelschiene miteinander verbunden sind, **dadurch gekennzeichnet, dass** das Schaltelement (7) einen parallel zur Achse (D) verlaufenden und auf Abstand von dieser Achse befindlichen Kontaktfinger (8) aufweist, so dass der feststehende Erdungskontakt (6) und der Kontaktfinger (8) durch Verlagerung des Schaltelements in axialer Richtung (D) ineinander eingreifen, wobei die Erdungs- und die Schaltstellung beiderseits der Öffnungsstellung liegen.

2. Elektrischer Schalter nach Anspruch 1, **dadurch gekennzeichnet, dass** ein erster feststehender Schaltkontakt (11) einer der beiden Sammelschienen und ein zweiter feststehender Schaltkontakt der zweiten Sammelschiene (5) in der gleichen axialen Richtung (D) eines axial verlaufenden Verschiebeteils (9) des elektrisch leitfähigen Schaltelements (7) positioniert sind.

3. Elektrischer Schalter nach Anspruch 1 oder 2, wobei der Bestandteil des verschiebbaren Schaltteils (7) eine Stange (9) ist, die in der axialen Richtung innerhalb einer (4) der beiden Sammelschienen verschiebbar ist, wobei der Kontaktfinger mit der Stange ein Y bildet.

4. Elektrischer Schalter nach Anspruch 3, wobei die Stange (9) des Schaltelements in einen feststehenden Schaltkontakt (12) eingreift, der hohl ausgerührt und an der weiteren Sammelschiene (5) befestigt ist.

5. Elektrischer Schalter nach Anspruch 1 oder 2, wobei das Verschiebeteil des Schaltelements (7) eine Buchse (9') ist, die in axialer Richtung an einer (4) der beiden Sammelschienen verschiebbar ist, wobei der Kontaktfinger mit der Buchse ein Y bildet.

6. Elektrischer Schalter nach Anspruch 5, wobei die Buchse (9') des Schaltelements einen champignonförmigen, feststehenden Schaltkontakt (12') übergreift, der an die andere Sammelschiene (5) befestigt ist.

7. Elektrischer Schalter nach Anspruch 1 bis 6, wobei der feststehende Erdungskontakt (6) ein leitfähiges, hohl ausgeführtes Kontaktteil (6'A) mit elastischen Kontaktfingern enthält, in welches der Kontaktfinger des beweglichen Schaltelements eingreift.

8. Elektrischer Schalter nach einem der Ansprüche 1 bis 6, wobei der feststehende Erdungskontakt (6) eine Stange und der Kontaktfinger des beweglichen Schaltelements ein hohl ausgeführtes, tulpenförmiges Ende aufweist, in welches der feststehende Erdungskontakt eingreift.

9. Elektrischer Schalter nach einem der Ansprüche 1 bis 8, wobei der feststehende Erdungskontakt (6') teilweise in einer Tragplatte (2) aus Isoliermaterial versenkt ist, die das Gehäuse verschließt.
